# EUROPÄISCHE PATENTSCHRIFT

(11) **EP 1 434 704 B1**
(45) Veröffentlichungstag und Bekanntmachung des Hinweises auf die Patenterteilung: **23.04.2008**
(21) Anmeldenummer: 02764560.5
(22) Anmeldetag: 04.09.2002
(51) Int. Cl.: B60R 21/01

(54) **RÜCKHALTEVORRICHTUNG FÜR EIN FAHRZEUG**
RESTRAINT DEVICE FOR A VEHICLE
DISPOSITIF DE RETENUE POUR VEHICULE

(30) Priorität: 04.10.2001 DE 10148866
(43) Veröffentlichungstag der Anmeldung: 07.07.2004
(73) Patentinhaber: ROBERT BOSCH GMBH, 70442 Stuttgart (DE)
(72) Erfinder: MATTES, Bernhard, 74343 Sachsenheim (DE); PFIZENMAIER, Heinz, 71540 Murrhardt (DE); THIEL, Michael, 71229 Leonberg (DE)
(86) Internationale Anmeldenummer: PCT/DE2002/003256
(87) Internationale Veröffentlichungsnummer: WO 2003/031235

(56) Entgegenhaltungen:
- EP-A- 0 419 047
- EP-A- 0 668 192
- GB-A- 2 340 454
- US-A- 5 362 098
- US-A- 5 515 399
- US-A- 6 070 114
- US-A- 6 081 044

## Beschreibung

### Stand der Technik

Die Erfindung geht aus von einer Rückhaltevorrichtung für ein Fahrzeug nach der Gattung des unabhängigen Patentanspruchs.

In der gattungsgemäßen Offenlegungsschrift DE 195 41 998 A1 wird ein Airbagsystem für ein Kraftfahrzeug offenbart, bei dem sowohl die Datenübertragung als auch die Energieübertragung drahtlos vorgenommen wird. Die Funkverbindung wird dabei in Frequenzbereichen zwischen 50 und 150 kHz und zwischen 100 und 140 kHz als bevorzugt beschrieben. Es wird erwähnt, dass die Datenübertragung auch im Mikrowellen-Frequenzbereich statffinden kann.

Aus US 6 070114 ist es bekannt, bei einem drahtgebundenen Bus-System auch einen Eindrahtbus vorzusehen, über den Daten und Energie übertragen werden können. Dies ist auch aus der GB 2 340 454 A bezüglich eines Insassenschutzsystems bekannt. Aus EP 668 192 A2 ist eine Vorrichtung zur Übertragung von Energie und Daten zwischen der Fahrtzeit und der Lenkradzeit der von Kraftfahrzeugen bekannt. Diese Übertragung wird drahtlos vorgenommen. Dafür kann ein Transformator verwendet werden. Aus US-A-5515399 ist ebenfalls eine Daten- und Energieübertragung mittels eines Transformators bekannt. Aus US 6 081 044 ist ebenfalls eine drahtlose Übertragung von Energie und Daten bei einem Rückhaltesystem bekannt. EP 0 419 047 A2 lehrt ein Spektrumkommunikationssystem mittels Chirpsmodulation bei einem LAN.

Aufgabe der Erfindung ist es, eine Rückhaltevorrichtung zu Schaffen, die eine größere Empfangssicherheit und eine Verbesserte Energieübertragung gekennzeichnet ist.

### Vorteile der Erfindung

Die erfindungsgemäße Rückhaltevorrichtung für ein Fahrzeug mit den Merkmalen des unabhängigen Patentanspruchs hat demgegenüber den Vorteil, dass zum einen die Datenübertragung im Gigahertz-Bereich zwischen 2,45 und 24 Gigahertz stattfindet, was eine sicherere Übertragung möglich macht, da eine größere Bandbreite zur Verfügung steht. Zum anderen sind für die Frequenzen unter 2,45 Gigahertz störende Resonanzerscheinungen im Kfz-Innenraum vorwiegend und weisen daher eine Empfangsunsicherheit auf.

Damit ist also der Frequenzbereich, der hier genannt wird, mit einer größeren Empfangssicherheit verbunden. Bei Frequenzen oberhalb von 24 Gigahertz muß mit verstärkten Abschattungen durch den menschlichen Körper gerechnet werden, was ebenfalls zu einer Empfangsbeeinträchtigung führen könnte.

Weiterhin bringt die Übertragung der Energieversorgung über eine Eindrahtleitung den Vorteil, dass eine höhere Leistungsaufnahme möglich ist und gegenüber Zweidrahtleitungen eine Leitung eingespart wird. Die Plusversorgung bei der Spannung wird hier durch die Eindrahtleitung zugeführt, während Masse durch die Karosserie bereitgestellt wird.

Weiterhin ist es von Vorteil, dass eine Nahfeldübertragung bei beweglichen Teilen eingesetzt wird, so dass Stecker vermieden werden und damit die Übertragungssicherheit weiter erhöht wird.

Darüber hinaus ist es von Vorteil, dass für die Nahfeldübertragung bei der Energieübertragung ein Transformator vorgesehen ist. Dies ist eine effiziente Übertragungsmöglichkeiten, die keinen Stecker benötigt.

Durch die in den abhängigen Ansprüchen aufgeführten Maßnahmen und Weiterbildungen sind vorteilhafte Verbesserungen der im unabhängigen Patentanspruch angegebenen Rückhaltevorrichtung für ein Fahrzeug möglich.

Besonders vorteilhaft ist, dass durch die Verwendung von Mikrowellen eine Spread-Spektrumtechnik verwendet werden kann, bei der die Information über eine größere Bandbreite verteilt wird, so dass damit ein frequenzselektives Fading keine gravierenden Auswirkungen auf die Übertragung hat und damit die Übertragung insgesamt sicherer wird.

Desweiteren ist es von Vorteil, dass die Sensoren und die Rückhaltemittel jeweils Energiespeicher aufweisen, so dass bei einem Ausfall der Energieversorgung durch einen Leitungsbruch beispielsweise dennoch der Betrieb der Komponenten für eine bestimmte Überlebenszeit weiter aufrechterhalten werden kann.

Schließlich ist es auch von Vorteil, dass für die Datenübertragung Codespreizung eingesetzt werden kann, die eine besondere effiziente Nutzung eines vorgegebenen Frequenzbandes für mehrere miteinander kommunizierende Stationen ermöglicht.

### Zeichnung

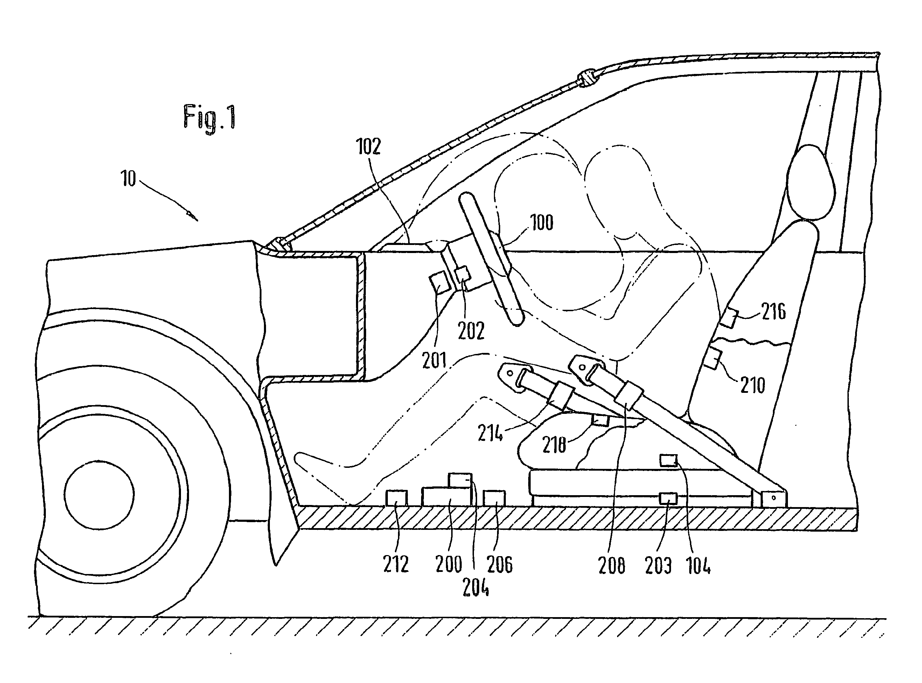

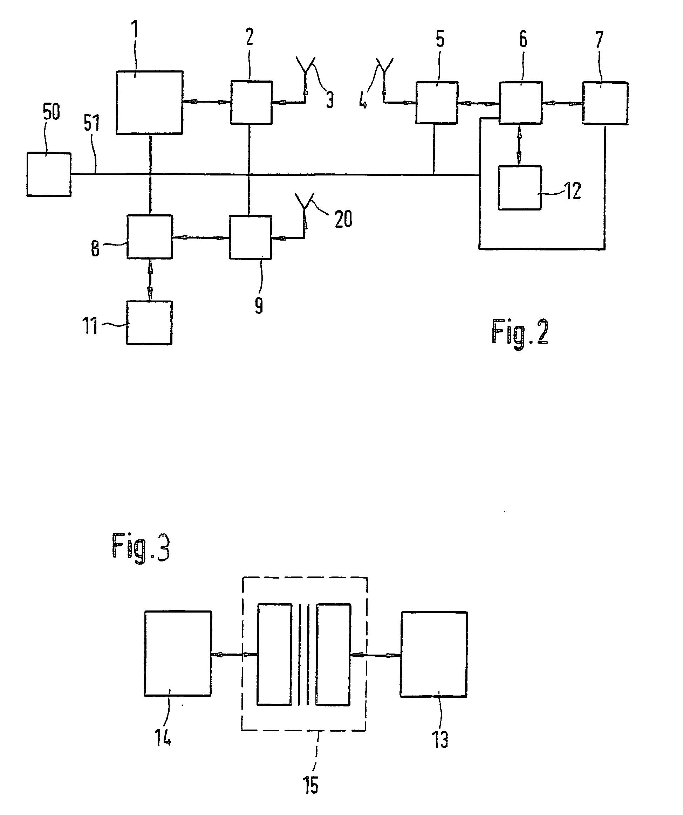

Ausführungsbeispiele der Erfindung sind in der Zeichnung dargestellt und werden in der nachfolgenden Beschreibung näher erläutert. Es zeigt
Figur 1 eine perspektivische Ansicht eines Fahrzeugs, das ein der Erfindung entsprechendes Rückhaltesystem umfasst, Figur 2 ein Blockschaltbild der erfindungsgemäßen Rückhaltevorrichtung und Figur 3 eine Nahfeldübertragung mittels Transformator mit Eisenkern.

### Beschreibung

Figur 1 zeigt eine perspektivische Ansicht eines Fahrzeugs welches ein der Erfindung entsprechendes Rückhaltesystem 10 umfasst. Wie in Figur 1 dargestellt, umfasst das Rückhaltesystem 10 mehrere Airbagmodule und zwar mindestens ein Airbagmodul 100 auf der Fahrerseite und ein Airbagmodul 102 auf der Beifahrerseite.

Ein elektronisches Steuergerät 200 und eine Mehrzahl von Sensoren 204, 206, 208, 210, 212, 214, 216 und 218 sind innerhalb des Fahrzeugs dargestellt. Das Steuergerät 200 ist hier beispielhaft auf dem Fahrzeugboden angeordnet, es kann aber auch im Fahrzeugtunnel montiert sein. Das gleiche gilt für die Sensoren 204, 206 und 212, die Beschleunigungssensoren sind. Zusätzlich sind hier an den beweglichen Teilen, dem Lenkrad und dem Sitz, Übertragungseinrichtungen 201, 202, 203 und 104 eingezeichnet, die für die Energieübertragung, die hier als Nahfeldübertragung realisiert ist, eingesetzt werden. Dabei sind bei einer Mikrowellenenergieübertragung der Sender 201 und der Empfänger 202 im Lenkrad und der Sender 203 und der Empfänger 104 für den jeweils im Vordersitz zur Energieversorgung der Aktuatoren und Airbagauslösung im Lenkrad und in den Vordersitzen vorhanden.

Die einzelnen Sensoren sind wie folgt eingesetzt. Es liegt ein Beschleunigungssensor 204 im Innenraum vor, ein Sitzpositionssensor 210 für den Fahrer und ein Sitzpositionssensor 216 für den Beifahrer, Temperatursensoren 206, 212, ein Sitzbelegungssensor 218 und Gurtschloßschalter 208 bzw. 214. Die im Sitz und am Sitz befindlichen Sensoren, Schalter und Airbags werden über die drahtlose Energieversorgung 203 zu 104 mit Strom versorgt. Dabei bezeichnet drahtlos die Nahfeldübertragung. Bis zu dieser Nahfeldübertragung wird eine Eindrahtleitung verwendet, an der das positive Potenzial anliegt, während die Karosserie für die Masse verwendet wird. Die Kommunikation zwischen dem Steuergerät 200, den Sensoren 204, 206, 210, 214, 216, 218 und den Aktuatoren 100 sowie 102 geschieht auf einem anderen Frequenzband.

In Figur 2 ist die erfindungsgemäße Rückhaltevorrichtung als Blockschaltbild dargestellt. Die Datenkommunikation erfolgt hier im Duplexbetrieb, es ist jedoch auch Halbduplex oder Simplex möglich.

Ein Steuergerät 1 ist über einen Datenein-/-ausgang mit einer Hochfrequenzsendeempfangsstation 2 verbunden. Die Hochfrequenzsendeempfangsstation 2 ist über einen Ein-/Ausgang mit einer Antenne 3 verbunden. Über Funkkanäle ist die Antenne 3 mit Antennen 4 und 20 verbunden. Die Antenne 4 ist an einen Ein-/Ausgang einer Hochfrequenzsendeempfangsstation 5 angeschlossen. Über einen Datenein-/-ausgang ist die Hochfrequenzsendeempfangsstation 5 mit einer Ansteuerung 6 für Rückhaltemittel 7 verbunden. Über eine Leitung ist die Ansteuerung 6 mit einer Energieversorgung 12 verbunden. Die Energieversorgung 12 ist hier ein Kondensator. Über einen zweiten Datenein-/-ausgang ist die Ansteuerung 6 mit den Rückhaltemitteln 7, also Airbags bzw. Gurtstraffern verbunden. Die Antenne 20 ist an einen Ein-/Ausgang einer Hochfrequenzsendeempfangsstation 9 angeschlossen. Über einen Datenein-/-ausgang ist die Hochfrequenzsendeempfangsstation 9 mit einem Sensor 8, hier einem Beschleunigungssensor verbunden. Der Beschleunigungssensor 8 ist über eine Leitung mit einer Energieversorgung 11 verbunden. Hier ist die Energieversorgung 11 ein Kondensator.

Das Steuergerät 1 berechnet den Auslösealgorithmus in Abhängigkeit von Sensorsignalen und steuert gegebenenfalls die Rückhaltemittel 7 an. Die Hochfrequenzsendeempfangsstationen 2, 5 und 9 verstärken und filtern empfangene Signale und setzen sie in einen Zwischenfrequenzbereich um und digitalisieren dann diese Signale, die dann als digitaler Datenstrom weiter übertragen werden. Zu sendende Signale werden verstärkt, um dann mit den Antennen 3, 4 oder 20 versendet zu werden.

Der Sensor 8 nimmt hier Beschleunigungswerte auf, verstärkt sie, filtert und digitalisiert sie, um dann diesen digitalen Datenstrom an die Hochfrequenzsendeempfangsstation 9 zu übertragen. Bei einem Ausfall der Energieversorgung 50 oder der Leitung 51, die hier als Eindrahtleitung ausgeführt ist, hilft der Energiereserve 11 bzw. 12, um den Betrieb des Sensors 8 bzw. der Rückhaltemittel 7 für eine bestimmte Überlebenszeit, die etwa der Dauer eines Crashs entspricht (ca. 150ms) weiter zu gewährleisten. Die Energieversorgungsleitung 51 ist hier als Eindrahtleitung ausgeführt, wobei die Fahrzeugkarosserie dann als Masse, also als der zweite Leiter verwendet wird. Die Ansteuerung 6 steuert in Abhängigkeit von Signalen vom Steuergerät 1 die Rückhaltemittel an.

Ist ein Auslösefall erkannt, dann werden die entsprechenden Rückhaltemittel 7 ausgelöst, um den Passagier zu schützen. Dabei werden auch Signale von dem Sitzplatzsensor 218 verwendet, um das Gewicht der Person zu bestimmen. Damit wird gewährleistet, dass ein optimaler Schutz der zu schützenden Person erreicht wird.

Damit die Hochfrequenzsendeempfangsstationen 2, 5 und 9 sich das gleiche Frequenzband teilen können, wird hier Codespreizung verwendet. D.h. ein schmalbandiges Signal wird durch einen Code über eine größere Bandbreite verteilt. Die Codes sind dabei so gestaltet, so dass sich keine gegenseitige Beeinflussung ergibt. Hier können auch verwandte Methoden eingesetzt werden.

In Figur 3 ist als Blockschaltbild eine Nahfeldübertragung mit einem Transformator gezeigt. Ein Transformator 15, der beispielsweise am Lenkrad oder am Sitz montiert ist, stellt die Schnittstelle zwischen zwei beweglichen Teilen dar. Die Primärseite 13 liefert Signale und die Energie an die Sekundärseite 14, die die Rückhaltemittel umfasst. Mit einem Eisenkern-behafteten Übertrager kann kostengünstig eine einfache Nahfeldübertragung von Energie und auch von Informationen erreicht werden.

## Patentansprüche

1. Rückhaltevorrichtung für ein Fahrzeug, wobei die Rückhaltevorrichtung (10) ein Steuergerät (1, 200), Sensoren (8) zur Aufprallsensierung und Rückhaltemittel (7) aufweist, wobei eine bidirektionale Datenübertragung zwischen dem Steuergerät (1) und den Sensoren (8) sowie den Rückhaltemitteln (7) drahtlos durchführbar ist, **dadurch gekennzeichnet, dass** die Rückhaltevorrichtung (10) Mittel (2, 5, 9) zur Datenübertragung im Frequenzbereich von 2,45 Gigahertz und 24 Gigahertz und Eindrahtleitungen zur Energieübertragung aufweist und dass die Rückhaltevorrichtung (10) bei der Energieübertragung bei benachbarten Teilen eine Nahfeldübertragung vorsieht, wobei für die Nahfeldübertragung bei der Energieübertragung ein Transformator (14) vorgesehen ist.

2. Rückhaltevorrichtung nach Anspruch 1, **dadurch gekennzeichnet, dass** die Rückhaltevorrichtung (10) bei der Datenübertragung eine Spreadspektrumtechnik einsetzt.

3. Rückhaltevorrichtung nach einem der Ansprüche 1 oder 2, **dadurch gekennzeichnet, dass** die Sensoren (8) und die Rückhaltemittel (7) jeweils Energiespeicher (11, 12) aufweisen.

4. Rückhaltevorrichtung nach Anspruch 1, 2 oder 3, **dadurch gekennzeichnet, dass** die Datenübertragung mittels Codespreizung durchführbar ist.

## Claims

1. Restraint device for a vehicle, wherein the restraint device (10) has a control unit (1, 200), sensors (8) for sensing impact and restraint means (7) wherein a bidirectional transmission of data between the control unit (1) and the sensors (8) as well as the restraint means (7) can be carried out in a wireless fashion, **characterized in that** the restraint device (10) has means (2, 5, 9) for transmitting data in the frequency range of 2.45 gigahertz and 24 gigahertz, and has single-wire lines for transmitting energy, and **in that** the restraint device (10) provides for near-field transmission for the transmission of energy in adjacent parts, wherein a transformer (14) is provided for near-field transmission during the transmission of energy.

2. Restraint device according to Claim 1, **characterized in that** the restraint device (10) uses a spread spectrum technique for the transmission of data.

3. Restraint device according to one of Claims 1 or 2, **characterized in that** the sensors (8) and the restraint means (7) each have energy stores (11, 12).

4. Restraint device according to Claim 1, 2 or 3, **characterized in that** the transmission of data can be carried out by means of code spreading.

## Revendications

1. Dispositif de retenue pour véhicule qui (10) comprend un appareil de commande (1, 200), des capteurs (8) pour détecter des collisions et des moyens de retenue (7),
une transmission bidirectionnelle de données se faisant entre l'appareil de commande (1) et les capteurs (8) ainsi que les moyens de retenue (7) par une liaison sans fil,
**caractérisé en ce que**
le dispositif de retenue (10) comporte des moyens (2, 5, 9) pour transmettre des données dans une plage de fréquence comprise entre 2,45 Gigahertz et 24 Gigahertz, et des lignes mono-fil pour la transmission de l'énergie et
lors de la transmission de l'énergie, le dispositif de retenue (10) prévoit une transmission par champ proche, pour des pièces voisines,
et pour cette transmission par champ proche, un transformateur (14) est prévu pour la transmission de l'énergie.

2. Dispositif de retenue selon la revendication 1,
**caractérisé en ce qu'**
il utilise une technique d'étalement de spectre pour la transmission des données.

3. Dispositif de retenue selon l'une des revendications 1 ou 2,
**caractérisé en ce que**
les capteurs (8) et les moyens de retenue (7) comportent chacun des accumulateurs d'énergie (11, 12).

4. Dispositif de retenue selon les revendications 1, 2, 3,
**caractérisé en ce que**
la transmission des données se fait par un étalement de code.
